# EUROPEAN PATENT APPLICATION

(11) **EP 3 674 912 A1**
(43) Date of publication of application: **01.07.2020**
(21) Application number: 19220073.1
(22) Date of filing: 30.12.2019
(51) Int. Cl.: G06F 16/215

(54) **DATA STITCHING AND HARMONIZATION FOR MACHINE LEARNING**

(30) Priority: 28.12.2018 US 201862786254 P; 23.12.2019 US 201916726223
(71) Applicant: Harman International Industries, Incorporated, Stamford, CT 06901 (US)
(72) Inventor: PATEL, Nikhil, Stamford, CT Connecticut 06901 (US); DICKSON, John, Stamford, 06901 (US); MEHTALIA, Dishita, Stamford, 06901 (US); RAMESH, Sandeep, Stamford, 06901 (US); BOHL, Gregory, Stamford, CT Connecticut 06901 (US)
(74) Representative: Rummler, Felix

(57) **Abstract**

Techniques are disclosed for automatically pre-processing data to generate a single view of the data that is suitable for machine learning and data analytics operations. Multiple data sets are joined together using one or more primary keys if raw data in the data sets have a same frequency. On the other hand, if raw data in the data sets do not have the same frequency, then for raw data in data sets having a different frequency than data in a user-specified base data set, the raw data is normalized and resampled. The normalized and resampled data in the data sets is further aggregated based on timestamps associated with the base data set, and the data sets are then joined to the base data set using one or more primary keys. The joined data sets can be stored and used to train machine learning models and/or for data analytics operations.

## Description

### CROSS-REFERENCE TO RELATED APPLICATIONS

This application claims priority benefit of the United States Provisional Patent Application titled, "AUTOMATICALLY COMBINING HETEROGENOUSLY SAMPLED VEHICULAR DATA," filed on December 28, 2018 and having Serial No. 62/786,254. The subject matter of this related application is hereby incorporated herein by reference.

### BACKGROUND

### Technical Field

The present disclosure relates generally to machine learning and, more specifically, to data stitching and harmonization for machine learning.

### Description of the Related Art

Machine Learning (ML) and data analytics typically rely on large quantities of data for, respectively, training machine-learning models and identifying meaningful patterns within data, among other things. Raw data from different sources, such as the data collected by various sensors on a vehicle, can have different structures, formats, and frequencies. As used herein, the "frequency" of data refers to an amount of time (e.g., a minute, second, fraction of a second, microsecond, etc.) during which one or more data points are typically recorded. For example, some vehicle sensor data may be recorded every microsecond, while other vehicle sensor data may be recorded at a lower frequency, such as every minute.

Due to the heterogeneous forms of raw data, data scientists can have difficulty "shaping" or "pre-processing" such data into a uniform structure that is suitable for training machine learning models and data analytics operations. Oftentimes, data scientists spend substantial amounts of time shaping raw data prior to being able to use the data in the first instance. As a general matter, the shaping or pre-processing of raw data is usually consuming and labor intensive.

As the foregoing illustrates, what is needed in the art are more effective techniques for pre-processing data.

### SUMMARY

One embodiment of the present application sets forth a computer-implemented method for pre-processing data. The method includes, for each data set included in a plurality of data sets, normalizing raw data included in the data set to generate normalized data within the data set. The method further includes, for each data set included in the plurality of data sets, aggregating the normalized data within the data set based on a time duration associated with a first data set to generate aggregated data within the data set. In addition, the method includes joining the plurality of data sets that include aggregated data to the first data set to generate a joined data set.

Further embodiments of the present application include, without limitation, a non-transitory computer-readable storage medium that includes instructions that enable a computer system to implement one or more aspects of the above method, as well as a computer system configured to implement one or more aspects of the above method.

At least one technical advantage of the disclosed techniques relative to the prior art is that, in the disclosed techniques, raw data is automatically pre-processed into a uniform structure that is suitable for machine learning and data analytics operations As a result, users are not required to pre-process raw data, which can be time consuming and labor intensive. Thus, many machine learning and data analysis problems that otherwise would take months to solve can be solved within days. These technical advantages represent one or more technological improvements over prior art approaches.

So that the manner in which the above recited features of this disclosure can be understood in detail, a more particular description of this disclosure may be had by reference to embodiments, some of which are illustrated in the appended drawings. It is to be noted, however, that the appended drawings illustrate only typical embodiments and are therefore not to be considered as limiting the scope of this disclosure, which may admit to other equally effective embodiments.

### BRIEF DESCRIPTION OF THE DRAWINGS

Figure 1 illustrates a computing system configured to implement one or more aspects of the various embodiments;
Figure 2 illustrates an approach for pre-processing data sets having the same frequency, according to various embodiments;
Figure 3 illustrates an approach for pre-processing data sets having different frequencies, according to various embodiments;
Figure 4 sets forth a flow diagram of method steps for pre-processing data, according to various embodiments;
Figure 5 is a more detailed illustration of one of the method steps of Figure 4, according to various embodiments; and
Figure 6 is a more detailed illustration of another one of the method steps of Figure 4, according to various embodiments.

### DETAILED DESCRIPTION

In the following description, numerous specific details are set forth to provide a more thorough understanding of the embodiments of the present disclosure. However, it will be apparent to one of skill in the art that the embodiments of the present disclosure may be practiced without one or more of these specific details.

### System Overview

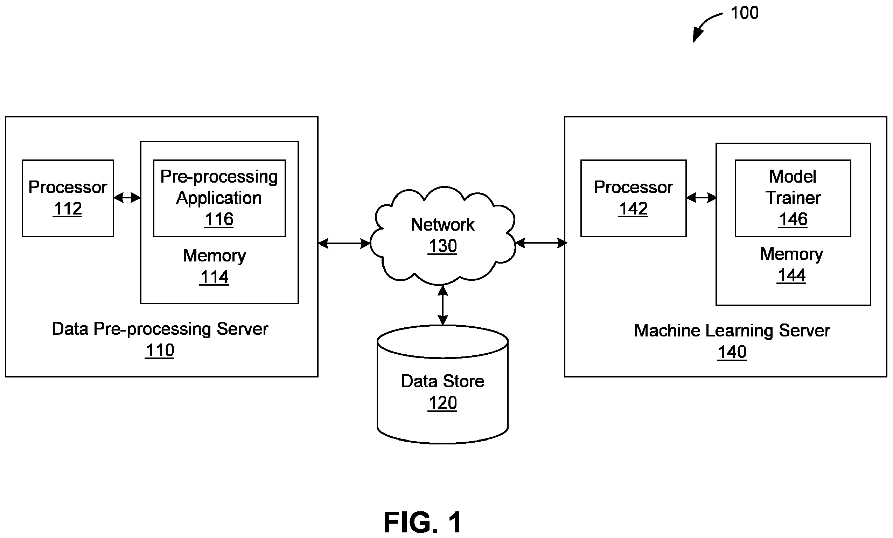

Figure 1 illustrates a computing system 100 configured to implement one or more aspects of the various embodiments. As shown, the system 100 includes a pre-processing server 110, a data store 120, and a machine learning (ML) server 140. Illustratively, the pre-processing server 110, the data store 120, and the ML server 140 are in communication over a network 130. In some embodiments, the network 130 may be a wide area network (WAN) such as the Internet, a local area network (LAN), or any other suitable network.

As shown, a pre-processing application 116 executes on a processor 112 of the pre-processing server 110 and is stored in a memory 114 of the pre-processing server 110. Although shown as a server for illustrative purposes, it should be understood that the pre-processing server 110 is not required to be a server and may generally be any type of computing system. The processor 112 is included to be representative of a single central processing unit (CPU), multiple CPUs, a single CPU having multiple processing cores, one or more graphics processing units (GPUs), field-programmable gate arrays (FPGAs), other types of processors, some combination of the foregoing, and the like. In operation, the processor 112 may control and coordinate the operations of other system components. The processor 112 may further receive user input from input devices, such as a keyboard or a mouse.

The system memory 114 of the pre-processing server 110 stores content, such as software applications and data, for use by the processor 112. The system memory 114 may be any type of memory capable of storing data and software applications, such as a random access memory (RAM), a read-only memory (ROM), an erasable programmable read-only memory (EPROM or Flash ROM), or any suitable combination of the foregoing. In some embodiments, a storage (not shown) may supplement or replace the system memory 114. The storage may include any number and type of external memories that are accessible to the processor 112. For example, and without limitation, the storage may include a Secure Digital Card, an external Flash memory, a portable compact disc read-only memory (CD-ROM), an optical storage device, a magnetic storage device, or any suitable combination of the foregoing.

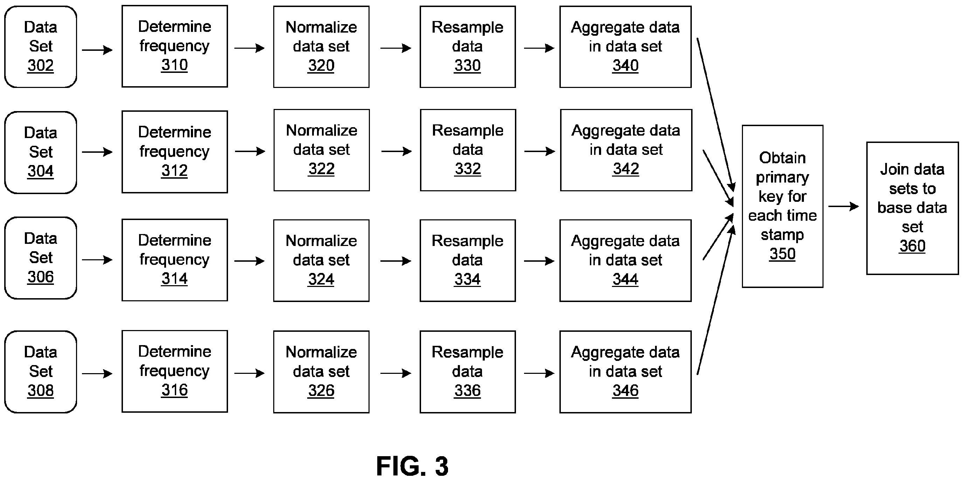

It will be appreciated that the pre-processing server 110 shown herein is illustrative and that variations and modifications are possible. For example, the number of processors 112, the number of system memories 114, and the number of applications included in the system memory 114 may be modified as desired. Further, the connection topology between the various units in Figure 3 may be modified as desired. In some embodiments, any combination of the processor 112 and the system memory 114 may be replaced with any type of virtual computing system, distributed computing system, or cloud computing environment, such as a public or a hybrid cloud.

The pre-processing application 116 is configured to pre-process raw data into a uniform structure that is suitable for training machine learning models or other data analytics operations, as discussed in greater detail below. For example, raw data from different sources in a vehicle may be stitched together into a uniform structure. Pre-processed data generated by the processing application 116 may be stored in the data store 120, or elsewhere (e.g., in the cloud).

In some embodiments, the data store 120 may include any storage device or devices, such as fixed disc drive(s), flash drive(s), optical storage, network attached storage (NAS), and/or a storage area-network (SAN). Although shown as accessible over the network 130, in some embodiments the pre-processing server 110 may include the data store 120. In some embodiments, the data store 120 may include one or more databases. As such, the system 100 may include a database management system (DBMS) for accessing and storing data in the data store 120.

Illustratively, a model training application 146 ("model trainer") is stored in a memory 144, and executes on a processor 142, of the ML server 140. Components of the ML server 140, including the memory 144 and processor 142 may be similar to corresponding components of the pre-processing server 110, discussed above. Although shown as a server for illustrative purposes, the ML server 140 is not required to be a server and may generally be any type of computing system.

Using pre-processed data generated by the pre-processing application 116, the model training application 145 can train one or more ML models to perform prediction tasks. The trained ML models may also be stored in the data store 120, or elsewhere. Subsequent to training, the trained ML models may be deployed to any technically feasible application(s) that make use of the trained models. Returning to the vehicle example, a ML model could be trained to predict when an engine failure is likely based on data collected from the vehicle, and such a ML model could be deployed in an application that runs on the vehicle to warn users of imminent engine failure. As another example, a ML model could be trained to and deployed to improve the performance of a vehicle.

The number of ML servers and computing devices may be modified as desired. In some embodiments, any combination of the processor 142 and the system memory 144 may be replaced with any type of virtual computing system, distributed computing system, or cloud computing environment, such as a public or a hybrid cloud. Further, the functionality included in any of applications may be divided across any number of applications or other software that are stored and executed via any number of devices that are located in any number of physical locations.

### Automated Data Pre-Processing

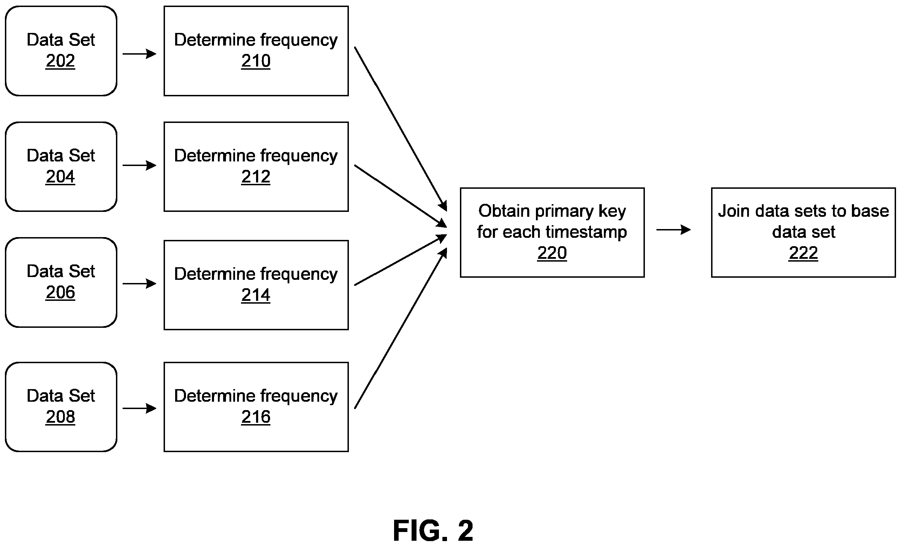

Figure 2 illustrates an approach for pre-processing data sets having the same frequency, according to various embodiments. The automated pre-processing of data that is disclosed herein can generally be used to structure a large volume of heterogeneous data into a single view having a uniform structure, thereby facilitating machine learning and data analytics operations. In some embodiments, the uniform structure includes structured data having appropriate labels, with a uniform distribution and available at equal time intervals.

As shown, the pre-processing application 116 receives data sets 202, 204, 206, and 208. Each of the data sets 202, 204, 206, and 208 may include any technically feasible type of data, in any format. For example, the data sets 206, 204, 206, and 208 could be JavaScript Object Notation (JSON) or Extensible Markup Language (XML) files that include database tables. Data in the data sets 202, 204, 206, and 208 may generally have various characteristics, such as quantities, frequencies, directions, and/or distributions. Further, the data may be in the form of scalars having only magnitude, or vectors having both magnitude and direction.

For example, in the context of vehicles, each of the data sets 202, 204, 206, and 208 could be a Controller Area Network (CAN) bus file specifying one or more diagnostic trouble code (DTC) codes at a number of timestamps. CAN bus is a vehicle bus standard designed to allow microcontrollers and devices to communicate with applications without a host computer. Examples of sensor data that can be sent through a CAN bus system are compass data, angle of attack data, gyroscope data, temperature data, actuator data, pressure data, ALT pressure data, and fuel management data.

Although CAN bus data is described herein as a reference example of vehicle data, techniques disclosed herein are also applicable to data from other sources in a vehicle ecosystem, such as event data recorders (EDRs), on-board diagnostic information (e.g., dongle, OBD-II), a head unit and infotainment system, an electronic control unit (ECU), or various sensors. It should be understood that a vehicle may include any number and type of components that generate source data in real-time. More generally, embodiments may be used to pre-process any suitable data from any source or sources, such as sensors or electronic devices in vehicles, the health care system, banks, etc.

The data sets 202, 204, 206, and 208 can be stored in any data store (e.g., in the cloud) and thereafter retrieved by the pre-processing application 116. Subsequent to retrieving the data sets 202, 204, 206, and 208, the pre-processing application 116 determines a frequency of data in the data sets 202, 204, 206, and 208 at 210, 212, 214, and 216, respectively. As described, the frequency of data refers to an amount of time during which one or more data points are typically recorded. Generally, data points in each of the data sets 202, 204, 206, or 208 may be recorded once every minute, second, fraction of a second, microsecond or any other amount of time. For example, one data set could include 1 record with a minute timestamp, another data set could include thousands of records with microsecond timestamps, yet another data set could include images at a frequency of 30 frames per second, etc. It should be noted that the frequency of data in particular data sets will generally depend on the type of data included therein. In order to determine the frequency of a given data set, the pre-processing application 116 may, e.g., use a timestamp (e.g., a one-minute interval) as a benchmark and determine the number of data records (e.g., for particular columns or fields) in the data set for that timestamp.

Assuming that the frequencies of data in the data sets 202, 204, 206, and 208 are identical, then the data are treated as being from a single source and merged together using a primary key. As shown, the pre-processing application 116 obtains a primary key for each timestamp at 220, and the pre-processing application 116 then joins each of the data sets to a base data set using the primary key at 222. As used herein, the "base" data set refers to a primary data set to which other data sets are joined, and the base data set can be user-specified in some embodiments. For example, a user could specify one of the data sets 202, 204, 206, or 208 as a base data set. The timestamps may be in a unit of time associated with the frequency of data in the data sets 202, 204, 206, 208, such as minute timestamps, microsecond timestamps, etc. For example, assume a user works at a company that manages multiple vehicles. In such a case, the user could specify VIN (vehicle identification number) numbers and a range of timestamps (e.g., the past two years) that the user is interested in, as well as a base table having a desired frequency (e.g., every minute), after which the pre-processing application 116 could automatically generate a final data set that includes relevant data and has a uniform structure, according to techniques disclosed herein.

In some embodiments, the primary key used to join data sets to a base data set is a timestamp or a generated value that corresponds to a timestamp. The joining of data sets is also referred to herein as "stitching" the data sets together. For example, assuming that each of the data sets is a database, then joining the data sets to the base data set at 222 may include creating a database row associated with the primary key for each timestamp and combining data from each of the data sets 202, 204, 206, and 208 for that timestamp in the database row. Doing so produces structured data having labels with a uniform distribution and available at equal time intervals corresponding to the frequency of the data in the data sets 202, 204, 206, and 208. As another example, when the data sets are joined to the base data set at 222, the primary key(s) that are used could be timestamp(s), and secondary keys could include values that are between a certain range or that are based on certain statistical parameters, such as a mean, median, mode, standard deviation, range, etc. In some embodiments, the pre-processing application 116 may also create one or more higher-level indices to facilitate querying and searching.

The pre-processed data can thereafter be stored in any suitable manner (e.g., in the data store 120) and used to train machine learning model(s), or in other data analytics operation(s). In addition, data may be filtered out of a pre-processed data set (e.g., a database) based on associated metadata, and a subset of the data set (e.g., a subset database) created based on search criteria. Because the pre-processed data has a uniform structure, a user may not need to shape the pre-processed data prior to training machine learning models or performing analysis using such data. For example, the user could compose a query based on timestamp(s) of interest to retrieve information from the pre-processed data.

Figure 3 illustrates an approach for pre-processing data sets having different frequencies, according to various embodiments. As shown, the pre-processing application 116 receives data sets 302, 304, 306, and 308. Similar to the data sets 202, 204, 206, and 208, the data sets 302, 304, 306, and 308 may include any technically feasible type of data, in any format. For example, the data sets 302, 304, 306, and 308 could be CAN bus files that include databases storing DTC codes at a number of timestamps.

The data sets 302, 304, 306, and 308 can be stored in any data store (e.g., in the cloud) and thereafter retrieved by the pre-processing application 116. Subsequent to retrieving the data sets 302, 304, 306, and 308, the pre-processing application 116 determines a frequency of data in the data sets 302, 304, 306, and 308 at 310, 312, 314, and 316, respectively, which is similar to determining the frequency of data sets at 210, 212, 214, and 216, discussed above. Assuming the frequencies of data in the data sets 302, 304, 306, and 308 are different, the pre-processing application 116 normalizes each of the data sets 302, 304, 306, and 308 at 320, 322, 324, and 326, respectively.

In some embodiments, normalizing a data set 302, 304, 306, or 308 includes determining a scaling value for the data set and computing scaled values (also referred to herein as "normalized" values) for data in the data set based on raw data values therein, the scaling value for the data set, and an offset that is used for unit conversions. In some embodiments, the scaled values are computed as Scaled_Value = Offset + Scale ^{∗} Raw_Data Value, where Scale is the scaling value and Offset is a unit converter or noise and baseline filtering value. The scaling value is used to scale data values between two points. For example, the scaled values may each be between 0 and 1, between a minimum and a maximum value, and/or follow some statistical distribution. In some embodiments, the scaling value for one of the data sets 302, 304, 306, or 308 may be a maximum value of the data set minus a minimum value of the data set. It should be noted that a scaling factor cannot be directly applied to data sets having 0 and 1 values. In such cases, frequency distributions of the 0's and the 1's may be created based on timestamps, and the frequency distributions scaled. The offset is used to account for data in the data sets 302, 304, 306, and 308 having different units of measurement or noise and baseline filtering. For example, the offset could utilize a relationship between variables in a data set that are next to each other in a data matrix to remove high or low frequency intrusions, which is also sometimes referred to as data offsetting or noise or baseline filtering.

In some embodiments, the normalization at 320, 322, 324, and 326 further includes computing features representative of raw data included in the data sets 302, 304, 306, and 308, respectively. The scaled data value discussed above is one example of a feature. Other examples of features include statistics calculated from the raw data in a data set, such as a mean value, a maximum value, a standard deviation, or the like. That is, information specified by the raw data is captured at the feature level by computing various features that are representative of the raw data. For example, the normalized data may include scaled values indicating a number of times a certain type of event that is recorded every microsecond occurred during multiple one-minute intervals, as well as other features such as mean, maximum, minimum, and standard deviations of values associated with the event during the one-minute intervals, etc. As illustrated by this example, statistics can be calculated as features of original data when the data is aggregated at a higher timestamp. In some embodiments, features may be computed that do not result in loss of information, and the features may be stored within the data sets in lieu of the raw data. That is, the raw data may be discarded after the features are computed, as the features are a cleaner form of data. For example, a CAN bus database table including 500 columns corresponding to DTC codes may be converted into a table including 5000 columns if 10 features are computed for each DTC code. In such a case, the number of features can also be reduced using down-sampling techniques, discussed in greater detail below.

In some embodiments, the pre-processing application 116 may decode raw data in the data sets 302, 304, 306, and 308 and normalize the decoded data, as opposed to normalizing raw data. Returning to the CAN bus example, raw CAN bus data has no structure. Instead, CAN bus data generally includes bits of data, each of which encodes a message. In such a case, the pre-processing application 116 may include a parser that identifies information such as packet type (e.g., gyroscopic data, compass data, etc.), position (e.g., x,y,z coordinates), and scale specified in raw CAN bus data, thereby decoding the data, and the parser may further convert the decoded data into a standard, readable format, such as a table. For example, in some embodiments, the standard format may be a table indicating physical events such as opening a door, closing a door, braking, acceleration, etc., as well as a length of time and position associated with each physical event. In such a case, the parser may link raw CAN bus data to the physical events. For example, the parser may associate particular CAN bus data exceeding a threshold with braking. Then, the pre-processing application 116 may normalize the decoded data to the standard format. For example, the normalized data may include scaled values indicating the number of times that braking occurred during a number of one-minute intervals, as well as other features such as mean, maximum, minimum, and standard deviations of values associated with the braking that occurred during the one-minute intervals, etc. As another example, the pre-processing application 116 could receive data sets in which braking and other physical events have already been indicated, in which case the parser would not need to decode CAN bus data to determine physical events.

Subsequent to normalizing the data sets 302, 304, 306, and 308, the pre-processing application 116 optionally resamples the normalized data sets at 330, 332, 334, and 336. In some embodiments, the pre-processing application 116 may provide a summary report of features created by the normalization process, ask a user whether re-sampling should be performed, and only perform re-sampling that is requested by the user. The re-sampling may include up-sampling and/or down-sampling the normalized data sets. Up-sampling can be used to extrapolate or impute values where normalized data is sparse. That is, up-sampling creates more data based on, e.g., trends in other sources of data. In some embodiments, if one type of data is correlated with other types of data, then the pre-processing application 116 may impute values for that type of data based on values for the other types of data. Returning to the example of a vehicle, if an engine failure light tends to be turned on after a number of other sensor readings, then the pre-processing application could impute engine failure light data based on data from the other sensors. As another example, in some embodiments, the pre-processing application 116 may use a systematic oversampling technique such as SMOTE (synthetic minority oversampling technique) to up-sample the normalized data at 330, 332, 334, and 336. In contrast to up-sampling, down-sampling can be used to remove redundant data. During down-sampling, the pre-processing application 116 can apply a statistical function to aggregate the normalized data and shrink such data to a desired level. For example, feature reduction techniques such as MRMR (maximum relevance and minimum redundancy technique) can be used to shrink the number of features in the normalized data sets.

After the normalized data sets are resampled, the pre-processing application 116 aggregates the normalized and resampled data, which are also referred to herein as features, in each of the data sets at 340, 342, 344, and 346. The aggregations at 340, 342, 344, and 346 are used to match the frequencies of the data sets 302, 304, 306, and 308 by merging data within data sets recorded at a higher frequency than a frequency associated with a base data set, without losing information. That is, the frequency of the base data set is fixed, while the other data sets are processed to adjust their frequencies to match that of the base data set. For example, one of the data sets 302, 304, 306, or 308 could include data records every microsecond, while another of the data sets 302, 304, 306, or 308 could include data records every minute for a given number of minutes (e.g., 5 minutes). Assuming the data set that includes data records every minute is the base data set, one minute could be used as a standard unit of time, and the pre-processing application 116 would aggregate the microsecond records by adding up such records for each minute interval of time over the given number of minutes (e.g., over the 5 minutes). In some embodiments, the pre-processing application 116 may permit a user to select one of the data sets 302, 304, 306, or 308 as the base data set whose time interval is used as the standard unit of time during the aggregations at 340, 342, 344, and 346. Returning to the example above, the user could select one of the data sets 340, 342, 344, or 346 that includes data records every minute as the base data set, in which case the pre-processing application 116 would aggregate data included in the other, microsecond-level data set by minute time intervals. As another example, if another data set includes data records with lower frequency than once per minute (e.g., once per hour), then the pre-processing application 116 may insert zeroes, or leave blank, minutes that are not associated with any data records. In such a case, no features (e.g., mean, maximum, minimum, standard deviation, etc.) would be computed for the data records with lower frequency than once per minute.

Although each of the data sets 340, 342, 344, and 346 is shown as being normalized, resampled, and aggregated in Figure 3 for illustrative purposes, it should be understood that if one of the data sets 340, 342, 344, or 346 is chosen as the base data set, then such a data set would not need to be normalized, resampled, and aggregated to match its own frequency. However, in some embodiments, the pre-processing application 116 may permit a user to select to use a timestamp that is longer in duration than the frequency of the base data set (e.g., an hour), in which case the base data set would need to be normalized, resampled, and aggregated as well.

Subsequent to the aggregations at 340, 342, 344, and 346, the features for the data sets 302, 304, 306, and 308 have identical frequency, similar to data in the data sets 202, 204, 206, and 208 discussed above in conjunction with Figure 2. Similar to 220, the pre-processing application 116 obtains a primary key for each timestamp at 350, and the pre-processing application 116 then joins each of the data sets to the base data set at 360. As described, the base data set can be any one of the data sets 302, 304, 306, or 308, and the base data set may be specified by a user in some embodiments. Further, the primary key can be a timestamp or a generated value that corresponds to a timestamp, in which case joining the data sets to the base data set at 360 may include, e.g., creating a database row associated with the primary key for a timestamp and combining features for each of the data sets 302, 304, 306, and 308 associated with the same timestamp in the database row. Doing so produces structured data having labels with a uniform distribution and available at equal time intervals corresponding to the frequency of the data in the base data set, in contrast to the heterogeneous data sets 302, 304, 306, and 308. As described, the pre-processing application 116 may also create higher-level indic(es) to facilitate querying and searching in some embodiments.

Although the data sets 302, 304, 306, and 308 are shown as being joined together at the same time for illustrative purposes, data sets may instead be joined to a base data set in succession after each such data set is processed to normalize, resample, and aggregate data therein. Some embodiments may permit a user to select between joining data sets to a base data set in succession or at the same time. For example, if there is a dependency of all of the data sets, then the user could select to join the data sets together at the same time based on their underlying distribution. On the other hand, if there is no such dependency, then the user could select to join the data sets to the base data set in succession.

Subsequent to joining the data sets, the pre-processed data can be stored in any suitable manner (e.g., in the data store 120) and thereafter used to train machine learning model(s) or in any technically feasible data analytics operations. Similar to the discussion above in conjunction with Figure 3, a user may not need to shape the pre-processed data prior to training machine learning models or performing analysis using such data, as the pre-processed data has a uniform structure. As described, the user could, e.g., compose a query based on timestamp(s) of interest to retrieve information from the pre-processed data. In addition, data may be filtered out of a pre-processed data set (e.g., a database) based on associated metadata, and a subset of the data set (e.g., a subset database) created based on search criteria.

Although Figures 2-3 show data sets having the same frequency and different frequencies, respectively, it should be noted that, in other cases, some data sets within a number of data sets may have the same frequency as a base data set, while other data sets may have different frequencies from the base data set. In such cases, the pre-processing application 116 may apply the normalization, re-sampling, and aggregation steps, described above in conjunction with Figure 3, to only those data sets having different frequencies from the base data set, while directly joining the data sets having the same frequency as the base data set (and the other data sets subsequent to normalization, re-sampling, and aggregation) to the base data set.

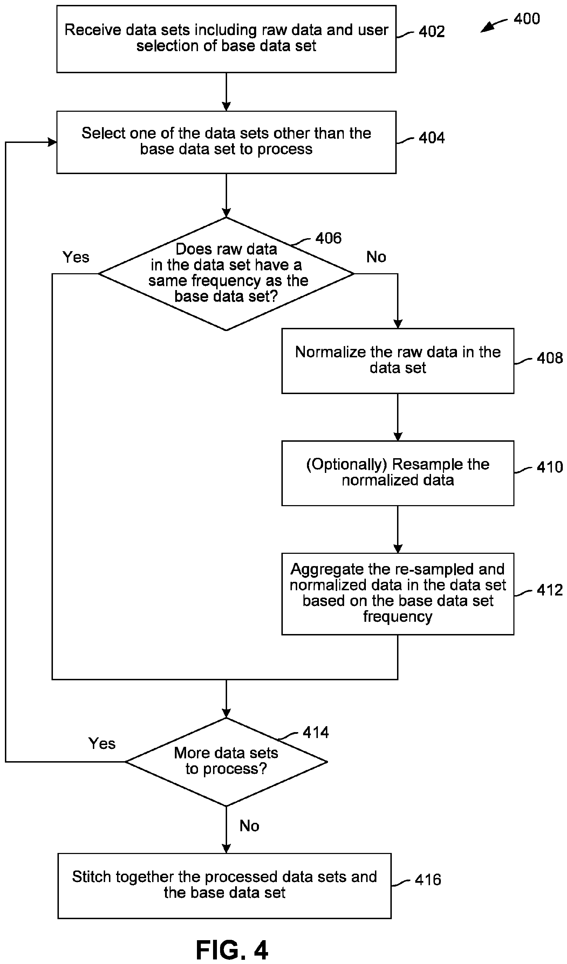

Figure 4 sets forth a flow diagram of method steps for pre-processing data, according to various embodiments. Although the method steps are described in conjunction with the system of Figure 1, persons of ordinary skill in the art will understand that any system configured to perform the method steps, in any order, is within the scope of the present invention.

As shown, a method 400 begins at block 402, where the pre-processing application 116 receives a number of data sets including raw data and a user selection of a base data set among the data sets. As described, the raw data may include any technically feasible type of data, from any data source, such as CAN bus data in the context of vehicles.

At block 404, the pre-processing application 116 selects one of the data sets that is not the base data set to process. As described, the base data set generally does not need to be normalized, resampled, and aggregated to match its own frequency, unless the user has selected to use a timestamp that is longer in duration than the frequency of the base data set.

At block 406, the pre-processing application 116 determines whether raw data in the selected data set has a same frequency as data in the base data set. If the pre-processing application 116 determines at block 406 that the raw data in the selected data set does not have the same frequency as the data in the base data set, then the method 400 proceeds to block 408, where the pre-processing application 116 normalizes the raw data in the selected data set. In some embodiments, the pre-processing application 116 may also decode the raw data prior to normalizing the data, as discussed above in conjunction with Figures 3-4.

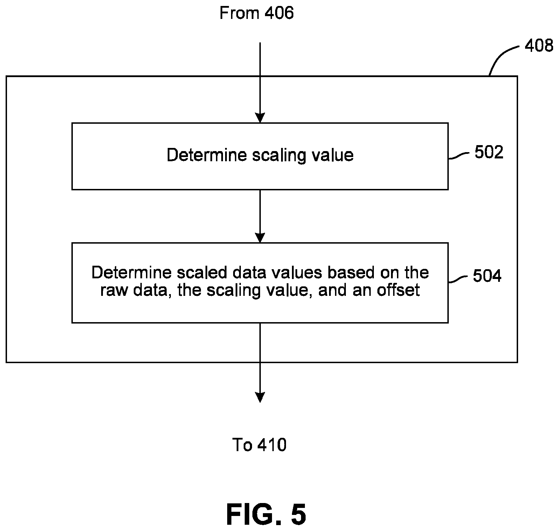

Figure 5 is a more detailed illustration of the normalization of raw data at block 408, according to various embodiments. Although the method steps are described in conjunction with the system of Figure 1, persons of ordinary skill in the art will understand that any system configured to perform the method steps, in any order, is within the scope of the present invention.

As shown, at block 502, the pre-processing application 116 determines a scaling value. In some embodiments, the scaling value may be a maximum value minus a minimum value of the data set, as discussed above in conjunction with Figure 3.

At block 504, the pre-processing application 116 determines scaled data values based on the raw data, the scaling value, and an offset. In some embodiments, each of the scaled values may be computed as Scaled_Value = Offset + Scale ^{∗} Raw_Data_Value.

In addition to, or in lieu of, computing scaled data values, the pre-processing application 116 in some embodiments may compute other feature values, including statistics calculated from the raw data in each of the data sets, such as a mean value, a maximum value, a minimum value, a standard deviation, or the like, during the normalization at block 408, as discussed above in conjunction with Figure 3.

Returning to Figure 4, at block 410, the pre-processing application 116 (optionally) resamples the normalized data. As described, re-sampling the normalized data may include up-sampling the normalized data to impute or extrapolate additional data and/or down-sampling the normalized data to remove duplicative features. In some embodiments, the pre-processing application 116 may provide a summary report of features created by the normalization process at block 408, and ask a user whether re-sampling should be performed. In such cases, the pre-processing application 116 may only perform re-sampling that is requested by the user.

At block 412, the pre-processing application 116 aggregates the resampled and normalized data in the selected data set based on the base data set frequency. As described, such an aggregation includes adding up the data records in the selected data set for time intervals associated with data in the base data set, such that frequencies across the two data sets become identical.

The method 400 then proceeds to block 414, where the pre-processing application 116 determines whether there are more data sets to process. If the pre-processing application 116 determines at block 406 that raw data in the selected data set has the same frequency as the base data set, then the method 400 also proceeds directly to block 414. If there are more data sets to process, then the method 400 returns to block 404, where the pre-processing application 116 selects another data set to process.

On the other hand, if there are no more data sets to process, then the method 400 proceeds to block 416, where the pre-processing application 116 stitches the processed data sets together with the base data set. Doing so produces a single view of the data, in a uniform structure, that can be used for machine learning or data analytics operations. As described, the processed data sets are shown as being stitched together with the base data set at the same time for illustrative purposes, but processed data sets may instead be stitched together with the base data set in succession after each data set is processed. In addition, some embodiments may permit a user to select between stitching processed data sets with the base data set in succession or at the same time depending on, e.g., whether there is a dependency of all of the data sets.

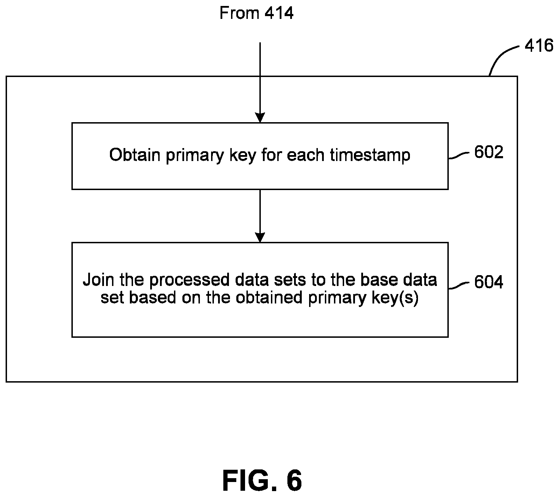

Figure 6 is a more detailed illustration of block 416, according to various embodiments. Although the method steps are described in conjunction with the system of Figure 1, persons of ordinary skill in the art will understand that any system configured to perform the method steps, in any order, is within the scope of the present invention.

As shown, at block 602, the pre-processing application 116 obtains a primary key for each timestamp associated with data in the processed data sets. In some embodiments, the primary key for each timestamp may be the timestamp itself or a generated value that corresponds to the timestamp.

Then, at block 604, the pre-processing application 116 joins the processed data sets to the base data set specified by the user based on the obtained primary key(s). Joining the data sets can include combining data from the data sets in, e.g., a row of a database table, or any other suitable format. In some embodiments, the pre-processing application 116 may also create higher-level indic(es) to facilitate querying and searching.

Subsequent to the stitching performed at block 416, the data that has been pre-processed may be persisted in any data store, from which the pre-processed data can be retrieved and used to train ML models or other data analytics operations. For example, a ML model could be trained using vehicle data that has been stitched together and harmonized, and the trained ML model could be deployed to improve the performance of a vehicle.

In sum, techniques are disclosed for automatically pre-processing data, via stitching and harmonization, to generate a single view of the data that is suitable for machine learning and data analytics operations. In the disclosed techniques, multiple data sets are joined together using one or more primary keys if raw data in the data sets have a same frequency. On the other hand, if raw data in the data sets do not all have the same frequency, then for raw data in data sets having a different frequency than data in a user-specified base data set, the raw data is normalized and (optionally) resampled. The normalized and resampled data in the data sets is further aggregated based on timestamps associated with the base data set, and the data sets are then joined to the base data set using one or more primary keys. In both cases, the joined data sets can be stored and used to train machine learning models and/or for data analytics operations.

At least one technical advantage of the disclosed techniques relative to the prior art is that, in the disclosed techniques, raw data is automatically pre-processed into a uniform structure that is suitable for machine learning and data analytics operations As a result, users are not required to pre-process raw data, which can be time consuming and labor intensive. Thus, many machine learning and data analysis problems that otherwise would take months to solve can be solved within days. These technical advantages represent one or more technological improvements over prior art approaches.
1. Some embodiments include a computer-implemented method for pre-processing data, the method comprising for each data set included in a plurality of data sets, normalizing raw data included in the data set to generate normalized data within the data set, for each data set included in the plurality of data sets, aggregating the normalized data within the data set based on a time duration associated with a first data set to generate aggregated data within the data set, and joining the plurality of data sets that include aggregated data to the first data set to generate a joined data set.
2. The method according to clause 1, further comprising determining that the raw data included in each data set included in the plurality of data sets has a different frequency than raw data included in the first data set.
3. The method according to any of clauses 1-2, wherein normalizing the raw data included in the data set comprises determining a scaling value for the data set and scaling the raw data included in the data set based on the scaling value and an offset value.
4. The method according to any of clauses 1-3, wherein the scaling value for the data set is determined by subtracting a minimum data value included in the data set from a maximum data value included in the data set.
5. The method according to any of clauses 1-4, further comprising, for each data set included in the plurality of data sets, re-sampling the normalized data within the data set by at least one of up-sampling or down-sampling the normalized data.
6. The method according to any of clauses 1-5, wherein joining the plurality of data sets that include aggregated data to the first data set comprises assigning one or more primary keys to rows within the plurality of data sets that include aggregated data and the first data set and joining the plurality of data sets that include aggregated data to the first data set based on the one or more primary keys.
7. The method according to any of clauses 1-6, wherein the plurality of data sets comprises a plurality of database tables.
8. The method according to any of clauses 1-7, further comprising training at least one machine learning model based on the joined data set.
9. The method according to any of clauses 1-8, further comprising joining at least one other data set including raw data having a same frequency as raw data included in the first data set to the first data set.
10. Some embodiments include a non-transitory computer-readable storage medium including instructions that, when executed by a processor, cause the processor to perform steps for pre-processing data, the steps comprising for each data set included in a plurality of data sets, normalizing raw data included in the data set to generate normalized data within the data set, for each data set included in the plurality of data sets, aggregating the normalized data within the data set based on a time duration associated with a first data set to generate aggregated data within the data set, and joining the plurality of data sets that include aggregated data to the first data set to generate a joined data set.
11. The computer-readable storage medium according to clause 10, the steps further comprising, for each data set included in the plurality of data sets, re-sampling the normalized data within the data set.
12. The computer-readable storage medium according to any of clauses 10-11, wherein the re-sampling comprises at least one of up-sampling or down-sampling the normalized data.
13. The computer-readable storage medium according to any of clauses 10-12, the steps further comprising determining that the raw data included in each data set included in the plurality of data sets has a different frequency than raw data included in the first data set.
14. The computer-readable storage medium according to any of clauses 10-13, wherein joining the plurality of data sets that include aggregated data to the first data set comprises assigning one or more primary keys to rows within the plurality of data sets that include aggregated data and the first data set and joining the plurality of data sets that include aggregated data to the first data set based on the one or more primary keys.
15. The computer-readable storage medium according to any of clauses 10-14, wherein normalizing the raw data included in the data set comprises determining a scaling value for the data set and scaling the raw data included in the data set based on the scaling value and an offset value.
16. The computer-readable storage medium according to any of clauses 10-15, wherein the plurality of data sets comprises a plurality of database tables.
17. The computer-readable storage medium according to any of clauses 10-16, further comprising training at least one machine learning model based on the joined data set.
18. The computer-readable storage medium according to any of clauses 10-17, wherein each data set included in the plurality of data sets includes data from at least one of a Controller Area Network (CAN) bus, an event data recorder (EDR), on-board diagnostic information, a head unit, an infotainment system, an electronic control unit (ECU), or a sensor.
19. Some embodiments include a system comprising a memory storing instructions, and a processor that is coupled to the memory and, when executing the instructions, is configured to: for each data set included in a plurality of data sets, normalize raw data included in the data set to generate normalized data within the data set, for each data set included in the plurality of data sets, aggregate the normalized data within the data set based on a time duration associated with a first data set to generate aggregated data within the data set, and join the plurality of data sets that include aggregated data to the first data set to generate a joined data set.
20. The system of according to clause 19, wherein each data set included in the plurality of data sets comprises data collected by a respective sensor on a vehicle.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The described methods and associated actions may also be performed in various orders in addition to the order described in this application, in parallel, and/or simultaneously. The described systems are exemplary in nature, and may include additional elements and/or omit elements.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects.

The embodiments of the present disclosure generally provide for a plurality of circuits, electrical devices, and/or at least one controller. All references to the circuits, the at least one controller, and other electrical devices and the functionality provided by each, are not intended to be limited to encompassing only what is illustrated and described herein. While particular labels may be assigned to the various circuit(s), controller(s) and other electrical devices disclosed, such labels are not intended to limit the scope of operation for the various circuit(s), controller(s) and other electrical devices. Such circuit(s), controller(s) and other electrical devices may be combined with each other and/or separated in any manner based on the particular type of electrical implementation that is desired.

A block is understood to be a hardware system or an element thereof with at least one of: a processing unit executing software and a dedicated circuit structure for implementing a respective desired signal transferring or processing function. Thus, parts or all of the system may be implemented as software and firmware executed by a processor or a programmable digital circuit. It is recognized that any system as disclosed herein may include any number of microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof) and software which co-act with one another to perform operation(s) disclosed herein. In addition, any system as disclosed may utilize any one or more microprocessors to execute a computer-program that is embodied in a non-transitory computer readable medium that is programmed to perform any number of the functions as disclosed. Further, any controller as provided herein includes a housing and a various number of microprocessors, integrated circuits, and memory devices, (e.g., FLASH, random access memory (RAM), read only memory (ROM), electrically programmable read only memory (EPROM), and/or electrically erasable programmable read only memory (EEPROM).

While various embodiments of the invention have been described, it will be apparent to those of ordinary skilled in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof.

## Claims

1. A computer-implemented method for pre-processing data, the method comprising:
for each data set included in a plurality of data sets, normalizing raw data included in the data set to generate normalized data within the data set;
for each data set included in the plurality of data sets, aggregating the normalized data within the data set based on a time duration associated with a first data set to generate aggregated data within the data set; and
joining the plurality of data sets that include aggregated data to the first data set to generate a joined data set.

2. The method of claim 1, further comprising determining that the raw data included in each data set included in the plurality of data sets has a different frequency than raw data included in the first data set.

3. The method of claim 1, wherein normalizing the raw data included in the data set comprises determining a scaling value for the data set and scaling the raw data included in the data set based on the scaling value and an offset value.

4. The method of claim 3, wherein the scaling value for the data set is determined by subtracting a minimum data value included in the data set from a maximum data value included in the data set.

5. The method of claim 1, further comprising, for each data set included in the plurality of data sets, re-sampling the normalized data within the data set by at least one of up-sampling or down-sampling the normalized data.

6. The method of claim 1, wherein joining the plurality of data sets that include aggregated data to the first data set comprises assigning one or more primary keys to rows within the plurality of data sets that include aggregated data and the first data set and joining the plurality of data sets that include aggregated data to the first data set based on the one or more primary keys.

7. The method of claim 1, wherein the plurality of data sets comprises a plurality of database tables.

8. The method of claim 1, further comprising training at least one machine learning model based on the joined data set.

9. The method of claim 1, further comprising joining at least one other data set including raw data having a same frequency as raw data included in the first data set to the first data set.

10. A computer program product comprising a computer-readable storage medium including instructions that, when executed by a processor, cause the processor to perform the method of any preceding claim.

11. The computer program product of claim 10, wherein the instructions, when executed by the processor, further cause the processor to perform the following steps: for each data set included in the plurality of data sets, re-sampling the normalized data within the data set.

12. The computer program product of claim 11, wherein each data set included in the plurality of data sets comprises data collected by a respective sensor on a vehicle.
